Europäisches Patentamt

European Patent Office

Office européen des brevets

(19)

(11) Publication number: **0 110 431**
**A1**

## (12) EUROPEAN PATENT APPLICATION

(21) Application number: **83200836.1**

(22) Date of filing: **08.06.83**

(51) Int. Cl.³: **G 01 V 1/18**

(30) Priority: **08.06.82 NL 8202309**

(43) Date of publication of application: **13.06.84**
**Bulletin 84/24**

(84) Designated Contracting States: **AT DE FR GB IT NL**

(71) Applicant: **De Regt Special Cable B.V., Adm.**
**Helfrichweg 2, NL-2901 AB Capelle a/d IJssel (NL)**

(72) Inventor: **Asjes, Ronald Jan, de Kreyenbeek 26,**
**NL-5553 BL Valkenswaard (NL)**
Inventor: **Klaassen, Klaas Berend, Spinel 20, NL-2691 TM**
**'S-Gravenzande (NL)**
Inventor: **van Peppen, Jacobus Cornelis Leonardus,**
**Staalmeesterstraat 28, NL-2613 MX Delft (NL)**

(74) Representative: **Urbanus, Henricus Maria, Ir. et al, c/o**
**Vereenigde Octroolbureaux Nieuwe Parklaan 107,**
**NL-2587 BP 's-Gravenhage (NL)**

(54) **Acceleration-sensitive geophone.**

(57) An acceleration-responsive geophone of the type employing a transducer including a sensor coil (11) and a drive coil (12) which are both disposed in a magnetic field produced by a magnet structure. The magnet structure and the coils (11, 12) are mounted within a housing for movement relative to each other. The magnet structure is arranged to reduce the electromagnetic coupling between the sensor coil and the drive coil to substantially zero. The sensor coil (11) is coupled to the input of an electronic amplifier having its output coupled to the drive coil (12) to provide a feedback circuit. The transducer-amplifier combination has the behaviour of a bandpass filter. In order to render the combination substantially temperature-independent while maintaining its bandpass characteristics over a wide temperature range, the amplifier is a transconductance amplifier having an input impedance and an output impedance which are high relative to the impedance of the sensor coil and the impedance of the drive coil, respectively. A substantially temperature independent resistor (Ro) is connected in series to the drive coil (12), which resistor is connected to an output terminal via which the output signal of the transducer- amplifier can be collected.

-1-

TITLE MODIFIED
see front page
Active geophone, particularly an acceleration responsive geophone.

The invention relates to an active geophone, particularly an acceleration responsive geophone, for detecting mechanical vibrations, such as e.g. seismic waves.

A transducer for use in such a geophone comprises a housing including a magnet structure for producing permanent magnetic fields and a coil system of discrete first and second coils mounted in the magnetic fields, the magnet structure and the coil system being supported in the housing for movement relative to each other, and the magnet structure being so arranged that the coupling factor indicative of the electromagnetic coupling between the two coils themselves is substantially zero and electromagnetic coupling can occur only between a respective one of the two coils on the one hand and the magnet structure on the other. Such an active geophone further comprises an amplifier having its input connected to the first coil and having its output connected through a feedback circuit to the second coil, the arrangement of the geophone being so that the difference in velocity between the transducer housing and the portion of the transducer that is movable relative to this housing is reduced to zero by the action of a force on this movable transducer portion as caused by the electromagnetic interaction between the magnet structure and the second coil of the coil system as connected in the feedback circuit.

An active geophone which feedback facility as described above is an acceleration responsive geophone having a bandpass character. It has appeared that in an essential range of frequencies of mechanical vibrations to be detected, particularly a range of approximately 2-500 Hz, the second coil connected in the feedback circuit of the amplifier, the so-called drive coil, behaves as an essentially resistive impedance. It has further appeared that the resistance represented by this drive coil is temperature dependent, for example a temperature dependency of 0.4% per °C. Consequently, for the temperature range within which a geophone according to the present invention has to be useful, in particular a temperature range of from +55°C to +100°C, this temperature dependency boils down to a variation in resistance of approximately 62% over this range.

To achieve a relatively wide pass-band of the geophone to be regarded as a bandpass filter, a certain closed loop gain has been introduced into the feedback loop circuit including the amplifier to which the first or sensor coil and the second or drive coil are connected. The temperature dependency of the drive coil will cause this closed loop gain to vary over the temperature range in question too. Especially at the cut-off frequency on the low frequency end and at the cut-off frequency on the high frequency end of the frequency band, such a variation will result in undesirable shifts of these cut-off frequencies, and hence in changes in bandwidth. For example, the cut-off frequency on the low frequency end will shift approximately 62% upwards and the cut-off frequency on the high frequency end will shift approximately 38% downwards. Such frequency shifts entail unacceptable phase shifts.

It is an object of the invention to render a geophone of the above type temperature independent in the frequency range in question while maintaining the bandpass character in the desired frequency range.

To achieve this object, a geophone according to the invention is characterized in that the amplifier is a transconductance amplifier having an input impedance considerably higher than the impedance of the first coil of the coil system and an output impedance considerably higher than the impedance of the second coil of the coil system.

In a specific embodiment, a geophone according to the invention is characterized in that a substantially temperature independent resistor is connected in series with the second coil, which resistor is connected to an output terminal via which the output signal of the amplifier can be collected. In a further embodiment, a geophone according to the invention is characterized in that the second coil is a coil of small temperature coefficient.

The invention will now be described in greater detail with reference to the accompanying drawings, in which:

Fig. 1 shows a sectional view of an embodiment of a transducer for use in a geophone according to the invention;

Fig. 2 shows a schematic diagram in illustration of the invention; and

Fig. 3 shows a schematic diagram of an embodiment of a geophone according to the invention.

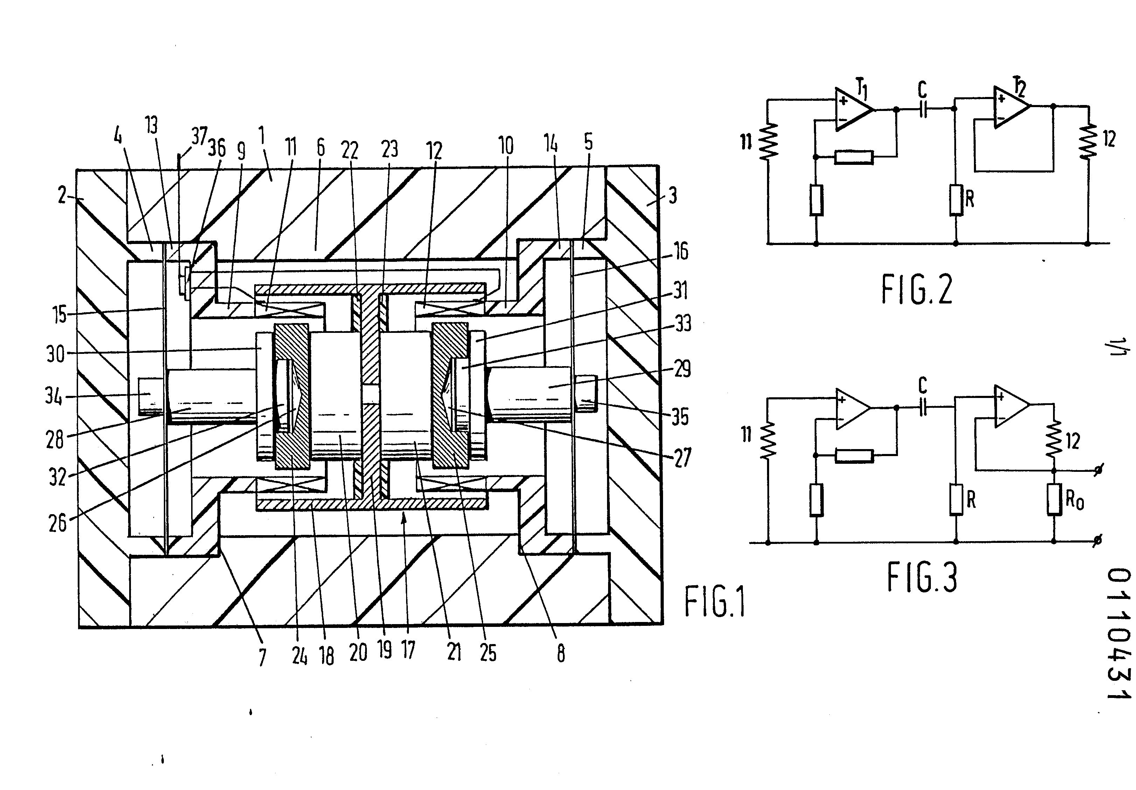

The embodiment shown in Fig. 1 of a transducer for use in a geophone according to the invention comprises a hollow cylindrical housing 1 of , for example, synthetic material that is open at both ends. These ends of the housing can be hermetically sealed by means of a first cover 2 and a second cover 3. Each one of these covers includes an annular collar 4, 5 adapted to extend into the interior of the housing in accurately fitting relationship. Each of these covers can be secured to the housing in hermetically sealing fashion, for example by glueing. The housing further includes a thickened wall portion 6 so as to define annular support faces 7, 8 at the two ends of the housing, which support faces extend transversely relative to the longitudinal axis of the housing. Each of these support faces supports one of two coil frames 9, 10. In turn, each coil frame supports a coil 11, 12 schematically shown in Fig. 1. For example, coil 11 functions as a velocity sensor and coil 12 as the drive coil. Furthermore, each coil frame includes a cylindrical flange 13, 14 the annular head face of which is located opposite the head face of the collar 4, 5 of the respective cover 2, 3. In the assembled state a substantially circular, flat support spring 15, 16 is clamped between these facing head faces. A magnet structure generally designated by 17 is supported by these two support springs for movement relative to the housing in practically only axial direction.

This magnet structure 17 is an integral unit composed of the following components: a substantially cylindrical, hollow magnet frame 18 that is open at both ends and includes a central portion 19 located intermediate these ends internally of the frame;

substantially cylindrical permanent magnets 20, 21 bearing on this central portion; centring rings 22, 23 of non-magnetic material (e.g. synthetic material) centring these magnets in the magnet frame; magnet pole rings 24, 25 bearing on the respective head faces of the magnets, each having its face remote from the associated magnet provided with a central recess 26, 27; and centring means 28, 29 of non-magnetic material (e.g. synthetic material). Each of these centring means has its end facing the magnet structure provided with a support flange 30, 31 bearing on the respective magnet pole ring and a cylindrical fitting head 32, 33 extending into the associated recess in the pole ring, thereby maintaining this pole ring in a centred position. Each centring means has its opposite end provided with a cylindrical portion 34, 35 of reduced diameter extending in fitting relationship through a central opening of the respective support spring to function as a bumper piece. Thus, in the event of non-energized coils, the magnet structure is prevented from undergoing undesirably large displacements relative to the housing, for example as a result of shocks occurring during transportation of the transducer.

In the present embodiment of the transducer, the magnet structure is supported for movement relative to the housing by two support springs, while the coil system comprising the two coils is fixedly mounted in this housing. The fact that the magnet structure is movable relative to the transducer housing as an integral unit entails the advantage that the spring suspension need not be dimensioned for taking up relatively large magnetic centring forces which may occur between components of a magnetic circuit if such components are movable relative to each other.

Fig. 2 shows a schematic wiring diagram of a geophone to which the present invention relates. In this diagram, 11 designates the sensor coil of the transducer described above and 12 the drive coil of this transducer. The electrical voltage developed across this coil, which voltage is indicative of the difference in velocity between the movable transducer portion and the housing, is applied to a voltage amplifier T1 the output signal of which is applied through a coupling network including a capacitor C and a resistor R to the input of an output stage T2, which is a voltage-to-current converting stage. The output current of this stage T2 is applied to the drive coil 12 the impedance of which is represented by $Z_d$. In the transducer described above the magnet structure is so arranged that the coupling factor which is indicative of the electromagnetic coupling between the sensor coil and the drive coil is substantially zero, while electromagnetic coupling can occur only between the drive coil on the one hand and the magnet structure on the other. In a geophone according to Fig. 2 it is achieved that a difference in velocity between the magnet structure and the transducer housing is reduced to zero by the action of a force on this magnet structure as caused by the electromagnetic interaction between this magnet structure and the drive coil of the coil system as connected in the feedback circuit. The closed loop gain G for such a geophone is defined by $G = \alpha_s \cdot \alpha_d \, Z_m \, A/Z_d$, where $\alpha_s$ and $\alpha_d$ are transmission factors associated with the sensor coil and the drive coil respectively, $Z_m$ is the impedance of the sensor coil, $Z_d$ is the impedance of the drive coil and A is the voltage gain of the stage $T_1$.

The thus-constructed geophone has a bandpass character, the bandwidth relative to the frequency $\psi_0$ (eigenfrequency of the transducer) depending on the gain A. The impedance $Z_d$ of the drive coil appears to be essentially resistive in the pertinent frequency range of the mechanical vibrations to be detected, so that the closed loop gain G is proportional to the ratio $A/R_d$, where $R_d$ is the resistance presented by drive coil 12 in this frequency range. In other words, this shows that the temperature dependent variation of the resistance of this drive coil results in a corresponding variation of the closed loop gain G. Such variations of the closed loop gain entail undesirable changes in the bandwidth, which changes result in unacceptable phase shifts.

To eliminate this drawback, in a geophone according to the invention a transconductance amplifier, i.e. an amplifier whose input impedance and output impedance are high compared to the impedance of the sensor coil and the impedance of the drive coil respectively, is connected between the sensor coil 11 and the drive coil 12.

Fig. 3 shows a schematic wiring diagram of an embodiment of a geophone according to the invention. Again, the sensor coil 11 is connected to a voltage amplifier introducing a voltage gain A. The output of this voltage amplifier is connected through a coupling network including a resistor R and a capacitor C to one input of an output stage operative as a voltage-to-current converter, which output stage has its output connected to the drive coil 12. A resistor $R_0$ of e.g. 1 k$\Omega$ is connected in series with this drive coil 12. An output voltage $U_0$ can be collected across resistor $R_0$, which output voltage is proportional to the acceleration as caused by the mechanical vibrations to be detected by the transducer of the geophone.

In a configuration as shown in Fig. 3 the closed loop gain G is proportional to the ratio $A/R_0$. By using a resistance of very small temperature coefficient for this resistor $R_0$, it is achieved that the aforesaid phase shifts as introduced by temperature variations are eliminated. For example, resistor $R_0$ may be made of an appropriate resistive paste by employing thick film techniques. In the embodiments shown in Figs. 2 and 3 the coupling network including the capacitor C serves to eliminate the DC off-set voltage occurring at the output of the voltage amplifier.

Self-evidently, the invention is not limited to the embodiment shown in Fig. 3. For example, an amplifier of the so-called OTA (operational transconductance amplifier) type may be used, provided the amplifier of this type used is a high input impedance one. In fact, when using an off-set compensating network including a capacitor such as C and a resistor such as R, this network should be dimensioned to pass relatively low frequencies (on the order of approximately 2 Hz), which implies that the resistor should have a relatively high resistance value. In consequence, the input resistance of the subsequent voltage-to-current converting stage should be high. Strictly speaking, however, it is not necessary to use such an RC coupling network. For example, an operational amplifier with automatic off-set compensating circuitry of known per se structure may be used instead.

Furthermore, it is also possible to arrange the coil as a coil of very small temperature coefficient, for example by winding the drive coil with constantan wire.

Generally speaking, in a geophone according to the invention the voltage developed across the sensor coil, which voltage is indicative of the relative velocity of the movable portion of the geophone, is measured at the input end of the amplifier, while at the output end of the amplifier a current is passed through the drive coil, which current is proportional to the force exerted via this drive coil on the movable portion of the geophone by electromagnetic action. The transconductance, i.e. the ratio between the output current and the input voltage of this amplifier, is defined by the resistance included in the feedback circuit. This resistance is thus determinative of the closed loop gain in the feedback loop whereby the velocity difference in question is reduced to zero.

In this manner, the closed loop gain is independent of temperature variations and undesirable bandwidth variations and phase shifts are eliminated.

0110431

## CLAIMS

1.       An active geophone comprising a transducer for detecting mechanical vibrations, which transducer comprises a housing including a magnet structure for producing permanent magnetic fields and a coil system of first and second coils mounted in said magnetic fields, said magnet structure and said coil system being supported in the housing for movement relative to each other, and said magnet structure being so arranged that the coupling factor indicative of the electromagnetic coupling between the two coils themselves is substantially zero and electromagnetic coupling can occur only between a respective one of the two coils on the one hand and the magnet structure on the other; and an amplifier having its input connected to said first coil and having its output connected through a feedback circuit to said second coil, the arrangement being so that the difference in velocity between the transducer housing and the portion of the transducer that is movable relative to said housing is reduced to zero by the action of a force on said movable transducer portion as caused by the electromagnetic interaction between said magnet structure and said second coil of said coil system as connected in said feedback circuit, characterized in that said amplifier is a transconductance amplifier having an input impedance considerably higher than the impedance of said first coil of said coil system and an output impedance considerably higher than the impedance of said second coil of said coil system.

-11- 0110431

2. An active geophone according to claim 1, characterized in that a substantially temperature independent resistor is connected in series with said second coil, which resistor is connected to an output terminal via which the output signal of said amplifier can be collected.

3. An active geophone according to claim 1, characterized in that said second coil is a coil of small temperature coefficient.

4. An active geophone according to one of the preceding claims, characterized in that said transconductance amplifier includes a voltage amplifying input stage having its output coupled to the input of a voltage-to-current converting output stage.

5. An active geophone according to claim 4, characterized in that said voltage amplifying input stage includes off-set eliminating facilities.

6. An active geophone according to one of the preceding claims, characterized in that said magnet structure is an integral component supported in said housing for movement relative thereto.

FIG.1

FIG.2

FIG.3

0110431

European Patent
Office

**EUROPEAN SEARCH REPORT**

0110431
Application number

EP 83 20 0836

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y | NL-A-7 909 287 (DE REGT SPECIAL CABLE B.V.)<br>* Page 12, line 3 - page 13, line 18; figures 3,4 * | 1,6 | G 01 V 1/18 |
| Y | US-A-4 223 275 (C.S. DEN BRINKER)<br>* Abstract; column 1, lines 10-37 * | 1 | |
| A | US-A-3 559 050 (J.F. MIFSUD)<br>* Abstract; column 3, lines 14-39; column 4, lines 10-17; figure 3 * | | |
| A | IEEE TRANSACTIONS ON INSTRUMENTATION AND MEASUREMENT, vol.IM-25, no. 3, September 1976, pages 227-231, New York, US<br>J.H. HUIJSING: "Instrumentation amplifiers: A comparative study on behalf of monolithic inte-gration" * Abstract; page 230, column 2, lines 44-50 * | | |
| A | US-A-4 128 010 (H.A. VERNON) | | |

TECHNICAL FIELDS SEARCHED (Int. Cl. ³)

G 01 V 1
G 01 H 11
G 01 P 15

The present search report has been drawn up for all claims

| Place of search<br>THE HAGUE | Date of completion of the search<br>28-09-1983 | Examiner<br>HAASBROEK J.N. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO Form 1503. 03.82